# EUROPEAN PATENT APPLICATION

(11) **EP 2 871 044 A1**
(43) Date of publication of application: **13.05.2015**
(21) Application number: 13400029.8
(22) Date of filing: 12.11.2013
(51) Int. Cl.: B29C 70/30, B29D 22/00, B29C 33/50, B29C 33/76

(54) **Method for producing a fibre-reinforced plastic component and mould core for use in such method**

(71) Applicant: AIRBUS HELICOPTERS DEUTSCHLAND GmbH, 86609 Donauwörth (DE)
(72) Inventor: Kretschmer, Tom, 86462 Langweid am Lech (DE)
(74) Representative: GPI & Associés

(57) **Abstract**

the invention concern a method for producing a fibre-reinforced plastic component, comprising the steps that a mould core (10) is made from an integral foam (11) with a closed skin (12) and with an open-cell foam core (13) connected to the skin (12); a fibre component and a plastic component of a fibre-reinforced plastic are laid-up on the skin (12) of the mould core (10); the fibre-reinforced plastic is cured; gas is evacuated from the foam core (13) so that the mould core (10) implodes or collapses or shrinks; the imploded mould core (10) is removed from the cured fibre-reinforced plastic.

## Description

The invention relates to a method for producing a fibre-reinforced plastic component and to a mould core, especially a mould core for use in such method.

A fibre-reinforced plastic (also called fibre-reinforced polymer) is a composite material made of a polymer matrix reinforced with fibres. The fibres are usually made of glass, carbon, and so on. The polymer is usually an epoxy, vinylester, and so on.

The use of mould cores made from a foam material is already known in the production of multi-walled rugged aircraft components. The structures are assembled on the mould core, and the core is then removed. This step is often more complicated than it appears. In fact, hollow parts or parts with particular shapes, especially shapes that present projecting portions, raised portions, enlargements, shoulders, undercuts, are often difficult or even impossible to separate from their mould cores.

Conventional methods for producing a fibre-reinforced plastic component, such as a hollow fibre composite article, normally involve the use of a mould core comprising an inflatable bag or a foam material, in a mould during compression moulding of a fibre-reinforced plastic, such as a fibre composite material wrapping, wrapped around said mould core.

In case of mould cores comprising an inflatable bag, the inflatable bag expands to a predetermined size and a predetermined shape using pressurized air for compression moulding of the composite material.

However, when the hollow composite article to be made has an irregular and complicated shape, drawbacks, such as an uneven surface or thickness and an uneven shape, can occur on the hollow composite article thus formed due to unequal expansion in different directions in the inflatable bag.

Further, these known mould cores comprising an inflatable bag are not very robust and thus quite difficult to handle.

In case of mould cores comprising a foam material, the use of foam materials that are soluble in water or some other liquid, is well-known in the aeronautic industry. In order to obtain sufficient solubility together with low density, the foam materials from which these mould cores are made are generally open-celled foam materials of the Aquacore™ kind (cf. US 6 828 373, EP 1 745 908, EP 1 695 805). Mould cores made in this way need to be sealed with a suitable material to avoid that the resin used as the matrix for the fibre-reinforced composite infiltrates into said core. Suitable sealing materials are described in DE 10 2005 011 930, DE 10 2005 011 488 and DE 10 2004 009 744.

The removal of the soluble foam is difficult, time-consuming and expensive as it requires the use of specific products, such as water or other solvents, and as additional equipment, like washing or filtering equipment, is often necessary. As these cores are washed out, they are destroyed and not reusable, and thus produce a large quantity of trash which has to be properly treated. The use of these foam mould cores is neither environmental friendly, nor in accordance with the intention to produce "green" products.

Further, these known mould cores comprising a foam material are not very robust and thus quite difficult to handle.

US 2009 0 087 599 relates to another solution and describes a method for making a hollow composite article, which includes preparing a deformable shell; filling the deformable shell with an incompressible-and-flowable material (for example sand, particulate silicone) through an access opening in the deformable shell so as to enable a size and a shape of the deformable shell to correspond to those of the hollow composite article in subsequent thermal moulding; covering the deformable shell with a composite material; thermally moulding the composite material in a mould so as to form the hollow composite article; removing an assembly of the hollow composite article, the deformable shell, and the incompressible-and-flowable material from the mould; opening the access opening and removing the incompressible-and-flowable material from the deformable shell through the access opening; and removing the deformable shell from the hollow composite article.

In the aforementioned known methods, the reproducibility is not optimal, among others because of the use of sealing means, in particular in case of use of a sealing film. For complex parts, it may be a real problem with consequences on the later handling, for example the fixation of riveting nuts. Moreover, these sealing films or varnishes are also shock-sensitive and require expensive and time-consuming manufacturing steps.

It is an object of the present invention to provide an improved method for producing a fibre-reinforced plastic component and an improved mould core, especially for use in such method.

This object is achieved by a method for producing a fibre-reinforced plastic component according to claim 1, a method for producing a fibre-reinforced plastic component according to claim 7, a mould core according to claim 10, and a mould core complex according to claim 13. Advantageous embodiments are described in the sub-claims.

According to a first aspect, the invention suggests a method for producing a fibre-reinforced plastic component, comprising the steps that:
- at least one mould core is made from at least one integral foam with a closed skin and with an open-cell foam core connected to the skin;
- at least one fibre component and at least one plastic or polymer matrix component of at least one fibre-reinforced plastic are laid-up or applied on at least a part of the skin of at least one of the mould cores;
- each fibre-reinforced plastic is cured;
- gas is evacuated from each foam core so that the respective mould core implodes or collapses or shrinks;
- each imploded mould core is removed from each cured fibre-reinforced plastic.

This suggested method avoids the aforementioned drawbacks of the known methods and affords the following advantages:
- simplification of the production of fibre-reinforced plastic components, especially of those being hollow and/or having an irregular and complicated shape, such as shapes that present projecting portions, raised portions, enlargements, shoulders, undercuts, while maintaining or even increasing profitability, product quality and ecological friendliness;
- capability of production of complex integral structures of fibre-reinforced plastic components;
- shortening the overall process time in the production of hollow and/or undercut fibre-reinforced plastic components due to
   - less time exposure for arranging the fibre preform lay-up before the curing step; and/or
   - less time exposure for releasing the mould core;
- weight saving due to
   - affording integral construction without join connection, such as rivets or gluing;
   - complete releasability of the mould core (in the known methods, sealing films and/or vacuum films often remain in the products)
- higher product quality and reproduction precision of inside product structures;
- due to the option of variably adjusting the inner pressure of the mould core, possibility to influence the consolidation of the laminate, in this consolidation the foam structure inside the foam core counteracts the endeavour of the closed skin to form a sphere;
- no necessity to seal an open-celled foam material by means of a closed film or envelope;
- higher ecological friendliness due to possible reutilisation of the complete mould core;
- suitability even for low volume production that is typical of aircrafts;
- cost reduction due to
   - low cost of the mould core;
   - insensibility and ruggedness of the mould core during handling;
   - no necessity for additional equipment for releasing the mould core; if needed, the vacuum equipment already needed and present for the curing, may be used.

Each of the integral foams may be designed in any way as needed and may for instance comprise at least one fluoropolymer and/or at least one fluoroelastomer and/or polytetrafluoroethylene (PTFE) and/or fluorinated ethylene propylene (FEP) and/or perfluoroalkoxy (PFA) and/or polyvinylidene fluoride (PVDF) and/or "Viton" TM and/or "Fluorel" TM and/or silicone and/or polyurethane (PU) and/or at least one latex and/or at least one polyolefin and/or polymethylpentene (PMP) and/or at least one functionalized polyolefin (FPO) and/or polypropylene (PP) and/or polyethylene (PE), and/or may for instance be made by mechanical foaming and/or chemical foaming and/or physical foaming and/or reaction injection moulding (RIM) and/or thermoplastic foam casting.

Each of the fibre components may be designed in any way as needed and may for instance comprise at least one glass fibre and/or at least one carbon fibre and/or at least one basalt fibre and/or at least one aramid fibre and/or at least one boron fibre and/or at least one ceramic fibre and/or at least one poly(methyl methacrylate) fibre and/or at least one polyester fibre and/or at least one polyamide fibre and/or at least one polyethylene fibre and/or at least one steel fibre, and/or may for instance be a fibre preform. Such preform may be designed in any way as needed and may for instance be manufactured by weaving and/or braiding and/or knitting and/or stitching, and/or may for instance comprise at least one non-woven, and/or may for instance be a dry preform or a prepreg.

Each of the plastic components may be designed in any way as needed and may for instance comprise at least one thermoset and/or at least one epoxy resin and/or at least one unsaturated polyester resin and/or at least one vinyl ester resin and/or at least one phenol-formaldehyde resin and/or polyurethane and/or at least one aminoplast and/or melamine resin and/or urea-formaldehyde and/or at least one polyimide and/or at least one thermoplastic and/or acrylic and/or at least one polyamide and/or at least one polyethylene and/or at least one polypropylene and/or at least one polystyrene and/or at least one polyvinyl chloride and/or at least one polyimide and/or polytetrafluoroethylene and/or at least one polyether ether ketone and/or at least one polyphenylene sulfide and/or at least one polysulfone and/or at least one polyetherimide and/or at least one elastomer and/or at least one natural rubber and/or at least one silicone rubber and/or polyurethane rubber.

The lay-up step may be designed in any way as needed and may for instance comprise manual hand lay-up of a prepreg and/or automated tape laying of a prepreg and/or manual lay-up of a fibre preform and/or direct preforming of a fibre preform on the mould core.

The curing step may be designed in any way as needed and may for instance comprise resin transfer moulding (RTM) and/or the use of an autoclave and/or a vacuum assisted process (VAP) and/or vacuum assisted resin transfer moulding (VARTM).

The evacuating step may be designed in any way as needed and may for instance comprise that at least one hole is pricked in the skin and the gas inside the foam core is exhausted or pumped out or pressed out via at least one of said holes, and/or that at least one hollow needle is punctured or punched or pierced through the skin and the gas inside the foam core is exhausted or pumped out or pressed out via at least one of said hollow needles, and/or that the gas inside the foam core is exhausted or pumped out via a fluid connecting element of the mould core, said fluid connecting element having a fluid passage penetrating the skin.

It may be provided that the method further comprises the step that:
• before the lay-up step, at least one release agent is applied on at least one part of at least one of the skins.

Each of said release agents may be designed in any way as needed and may for instance comprise a silicone oil.

It may be provided that:
- at least one of the skins has self-separating or self-releasing properties with respect to at least one of the plastic components of at least one of the fibre-reinforced plastics.

It may be provided that the method further comprises the step that:
- at least during at least a part of the curing step, the pressure in at least one of the foam cores is controlled according to:
   - a predetermined value which can be inferior to fifteen bars (15 bars) maximum and preferably between two (2) and seven (7) bars, or,
   - a predetermined function of the variation of the pressure in the foam core during the curing step.

It may be provided that:
- the pressure controlling step involves that the pressure is decreased and/or increased and/or kept unchanged.

It may be provided that:
- the pressure increasing is performed in such a way that at least one pressurized fluid is fed or pumped or pressed through the skin into the foam core and/or that a gas is generated inside the foam core by means of a chemical reaction and/or that gas inside the foam core is heated.

Each of the fluids may be designed in any way as needed and may for instance comprise at least one liquid, preferably water, and/or at least one gas, preferably nitrogen and/or carbon dioxide and/or helium.

It may be provided that:
- at least one of the foam cores is not destroyed or remains undestroyed or intact.

Thus, the respective foam cores may be reused.

According to a second aspect, the invention suggests a method for producing a fibre-reinforced plastic component, comprising the steps that:
- a first mould core is made from at least one first integral foam with a first closed skin and with a first open-cell foam core connected to the first skin;
- a second mould core is made from at least one second integral foam with a second closed skin and with a second open-cell foam core connected to the second skin;
- the first mould core and the second mould core are connected with each other to form a mould core complex;
- at least one fibre component and at least one plastic component of at least one fibre-reinforced plastic are laid-up or applied on at least a part of the skins of the mould core complex;
- each fibre-reinforced plastic is cured;
- gas is evacuated from each foam core so that the respective mould core implodes or collapses or shrinks;
- the imploded mould cores are removed from each cured fibre-reinforced plastic.

This suggested method avoids the aforementioned drawbacks of the known methods and affords the advantages of the methods according to the first aspect.

Said method may be designed in any way as needed, for instance in such a manner that:
- at least one further mould core is made from at least one further integral foam with a further closed skin and with a further open-cell foam core connected to the further skin;
- each further mould core is connected to the first mould core and/or the second mould core to form the mould core complex.

It may be provided that:
- the first mould core and the second mould core have mating connection faces;
- the mould core complex forming step is performed in such a way that the mating connection faces are connected with each other.

It may be provided that:
- the first foam core and the second foam core are coupled by means of at least one fluid conduit.

Each fluid conduit may be designed in any way as needed and may for instance be flexible or rigid and/or may comprise at least one hose and/or at least one pipe and/or at least one valve.

According to a third aspect, the invention suggests a mould core, especially for use in one of the suggested methods, comprising:
- at least one integral foam with a closed skin and with an open-cell foam core connected to the skin.

This suggested mould core avoids the aforementioned drawbacks of the known methods and affords the advantages of the suggested methods.

It may be provided that
- at least one of the skins has self-separating or self-releasing properties with respect to at least one of the plastic components of at least one of the fibre-reinforced plastics.

It may be provided that the mould core further comprises:
- at least one fluid connecting element with at least one fluid passage penetrating the skin, for evacuating gas from the foam core and/or for feeding a pressurized fluid into the foam core.

According to a fourth aspect, the invention suggests a mould core complex, especially for use in one of the suggested methods, comprising:
- a first mould core comprising at least one first integral foam with a first closed skin and with a first open-cell foam core connected to the first skin;
- a second mould core comprising at least one second integral foam with a second closed skin and with a second open-cell foam core connected to the second skin;
   wherein:
- the first mould core and the second mould core are connected with each other.

This suggested mould core complex avoids the aforementioned drawbacks of the known methods and affords the advantages of the suggested methods and the mould cores according to the third aspect.

Said mould core complex may be designed in any way as needed and may for instance comprise:
- at least one further mould core comprising at least one further integral foam with a further closed skin and with a further open-cell foam core connected to the further skin;
   wherein:
- each further mould core is connected to the first mould core and/or the second mould core.

Preferably, at least one of the mould cores is designed like one of the mould cores according to the third aspect.

It may be provided that:
- the first mould core and the second mould core have mating connection faces;
- the mating connection faces are connected with each other.

It may be provided that the mould core complex further comprises:
- at least one fluid conduit with at least one fluid passage penetrating the first skin and the second skin, for coupling the first foam core and the second foam core.

Each fluid conduit may be designed in any way as needed and may for instance be flexible or rigid and/or may comprise at least one hose and/or at least one pipe and/or at least one valve.

The remarks about one of the aspects of the invention, especially about particular features of this aspect, appropriately apply also to the other aspects of the invention.

In the following, preferred embodiments and examples of the invention will exemplarily be explained in more detail with respect to the appending drawings. The particular features resulting thereof are not restricted to the particular embodiments and examples, but may be combined with one or more particular features described or mentioned above and/or with one or more particular features of other embodiments or examples. The details shown in the drawings are only of explanatory nature and shall not be construed in any restrictive manner. The reference signs contained in the claims shall in no way restrict the scope of the present invention, but shall only refer to the embodiments and examples shown in the drawings. The drawings show in:
FIG. 1 a partly cut side view of a mould core in a preferred embodiment;
FIG. 2 a cut side view of the mould core of FIG. 1 together with a fibre-reinforced plastic component;
FIG. 3 a partly cut perspective view of a mould core complex in a preferred embodiment.

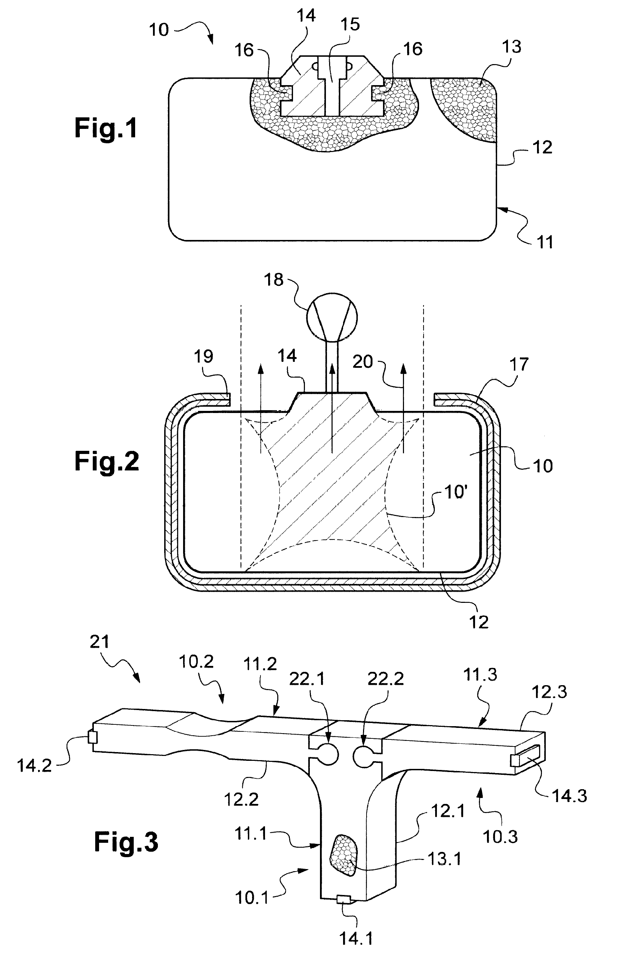

In Fig. 1, a mould core 10 in a preferred embodiment is schematically depicted that is suited and intended for use in a method for producing a fibre-reinforced plastic component, as will be explained in more details below. This mould core 10 comprises an integral foam 11 with a closed skin 12 and with an open-cell foam core 13 (as can be seen in the partly cut-away areas) connected to the skin 12.

In this preferred embodiment, the skin 12 has self-separating or self-releasing properties with respect to the plastic component to be processed in said method. The mould core 10 further comprises a fluid connecting element 14 with a fluid passage 15 penetrating the skin 12, for evacuating gas from the foam core 13, especially as performed in said method, and/or for feeding a pressurized fluid into the foam core 13, especially as performed in said method. The fluid connecting element 14 is anchored in the foam core 13, as shown at 16.

In FIG. 2, the mould core 10 in the preferred embodiment of FIG. 1 is schematically depicted as used in a first embodiment of a method for producing a fibre-reinforced plastic component 17.

In a mould core making step of this method, the mould core 10 is made from an integral foam 11 with a closed skin 12 and with an open-cell foam core 13 connected to the skin 12. In this first embodiment, this is performed by foaming polytetrafluoroethylene (PTFE) in a reaction injection moulding (RIM) process. During this foaming, a fluid connecting element 14 is inserted in the mould of the RIM process and overmoulded with the PTFE so as to be integrated in the foam core 13.

In a release agent applying step, a release agent is applied on the skin 12. In this first embodiment, this is performed by uniformly spraying a silicone oil on the skin 12.

In a lay-up step of this method, a fibre component and a plastic component of a fibre-reinforced plastic are laid-up on the skin 12. In this first embodiment, this is performed by automated tape laying of a prepreg, the prepreg comprising braided mat of carbon fibres as the fibre component and polyurethane as the plastic component.

In a curing step of this method, the laid-up fibre-reinforced plastic is cured to form the fibre-reinforced plastic component 17. In this first embodiment, this is performed by resin transfer moulding (RTM).

In a pressure controlling step, the pressure in the foam core 13 is controlled according to a predetermined function during the curing step. In this first embodiment, this is involves that the pressure is decreased and/or increased and/or kept unchanged. Further, the pressure increasing is performed in such a way that pressurized nitrogen is fed or pumped or pressed through the skin 12 into the foam core 13 by means of the pump 18, the discharge side of which having been coupled to the fluid connecting element 14.

In an evacuating step of this method, gas is evacuated from the foam core 13 so that the mould core 10 implodes (as shown by dashed line 10'). In this first embodiment, this is performed by coupling the suction side of a pump 18 to the fluid connecting element 14 and then exhausting or pumping out the gas that is present inside the foam core 13, through the fluid passage 15. Due to the previously sprayed-on release agent, the skin 12 easily releases from the inner surface of the fibre-reinforced plastic component 17.

In a removing step of this method, the imploded mould core 10' is removed from the fibre-reinforced plastic component 17. In this first embodiment, this is performed by pulling out (as depicted at arrows 20) the imploded mould core 10' as a whole through an opening 19 formed in the fibre-reinforced plastic component 17, without destroying the mould core 10 so that it can be used in a subsequent run of said method.

In FIG. 3, a mould core complex 21 in a preferred embodiment is schematically depicted that is suited and intended for use in a method for producing a fibre-reinforced plastic component, as will be explained in more details below. This mould core complex 21 comprises a first mould core 10.1, a second mould core 10.2, and a third mould core 10.3. The first mould core 10.1 comprises a first integral foam 11.1 with a first closed skin 12.1 and with a first open-cell foam core 13.1 (as can be seen in the partly cut-away area) connected to the first skin 12.1. The second mould core 10.2 comprises a second integral foam 11.2 with a second closed skin 12.2 and with a second open-cell foam core (not shown) connected to the second skin 12.2. The third mould core 10.3 comprises a third integral foam 11.3 with a third closed skin 12.3 and with a third open-cell foam core (not shown) connected to the third skin 12.3. Each mould core 10.1, 10.2, 10.3 further comprises a fluid connecting element 14.1, 14.2, 14.3 with a fluid passage penetrating the respective skin 12.1, 12.2, 12.3, for evacuating gas from the respective foam core 13.1.

The first mould core 10.1 is connected with the second mould core 10.2 and the third mould core 10.3. To achieve this, the first mould core 10.1 and the second mould core 10.2 have mating first connection faces connected with each other as shown at 22.1, while the first mould core 10.1 and the third mould core 10.3 have mating second connection faces connected with each other as shown at 22.2.

In the following, a second embodiment of a method for producing a fibre-reinforced plastic component will be explained, said method using the mould core complex 21 in the preferred embodiment of FIG. 3.

In a first mould core making step of this method, the first mould core 10.1 is made from a first integral foam 11.1 with a first closed skin 12.1 and with a first open-cell foam core 13.1 connected to the first skin 12.1. In this second embodiment, this is performed by foaming fluorinated ethylene propylene (FEP) in a thermoplastic foam casting process. During this foaming, the first fluid connecting element 14.1 is inserted in the mould of the RIM process and overmoulded with the FEP so as to be integrated in the first foam core 13.1.

In a second mould core making step of this method, the second mould core 10.2 is made from a second integral foam 11.2 with a second closed skin 12.2 and with a second open-cell foam core connected to the second skin 12.2. In this second embodiment, this is performed by foaming fluorinated ethylene propylene (FEP) in a thermoplastic foam casting process. During this foaming, the second fluid connecting element 14.2 is inserted in the mould of the RIM process and overmoulded with the FEP so as to be integrated in the second foam core.

In a third mould core making step of this method, the third mould core 10.3 is made from a third integral foam 11.3 with a third closed skin 12.3 and with a third open-cell foam core connected to the third skin 12.3. In this second embodiment, this is performed by foaming fluorinated ethylene propylene (FEP) in a thermoplastic foam casting process. During this foaming, the third fluid connecting element 14.3 is inserted in the mould of the RIM process and overmoulded with the FEP so as to be integrated in the third foam core.

In a mould core complex forming step, the first mould core 10.1 is connected with the second mould core 10.2 and with the third mould core 10.3. In this second embodiment, this is performed by connecting the first mating connection faces 22.1 with each other and by connecting the second mating connection faces 22.2 with each other.

In a lay-up step of this method, a fibre component and a plastic component of a fibre-reinforced plastic are laid-up on the skins 12.1, 12.2, 12.3 of the mould core complex 21. In this second embodiment, this is performed by manual hand lay-up of a prepreg, the prepreg comprising a woven mat of basalt fibres as the fibre component and silicone rubber as the plastic component.

In a curing step of this method, the laid-up fibre-reinforced plastic is cured to form the fibre-reinforced plastic component. In this second embodiment, this is performed by vacuum assisted resin transfer moulding (VARTM).

In an evacuating step of this method, gas is evacuated from the foam cores 13.1 so that the mould cores 10.1, 10.2, 10.3 implode. In this preferred embodiment, this is performed by coupling the suction side of a pump to the fluid connecting elements 14.1, 14.2, 14.3 and then exhausting or pumping out the gas that is present inside the foam cores 13.1, through the fluid passages of the fluid connecting elements 14.1, 14.2, 14.3.

In a removing step of this method, the imploded mould core 10.1, 10.2, 10.3 are removed from the fibre-reinforced plastic component. In this second embodiment, this is performed by pulling out each imploded mould core 10.1, 10.2, 10.3 as a whole through an opening formed in the fibre-reinforced plastic component, without destroying the mould cores 10.1, 10.2, 10.3 so that they can be used in a subsequent run of said method.

## Claims

1. Method for producing a fibre-reinforced plastic component (17), comprising the steps that:
• a mould core (10) is made from an integral foam (11) with a closed skin (12) and with an open-cell foam core (13) connected to the skin (12);
• a fibre component and a plastic component of a fibre-reinforced plastic are laid-up on the skin (12) of the mould core (10);
• the fibre-reinforced plastic is cured;
• gas is evacuated from the foam core (13) so that the mould core (10) implodes or collapses or shrinks;
• the imploded mould core (10) is removed from the cured fibre-reinforced plastic.

2. Method according to the preceding claim, further comprising the step that:
• before the lay-up step, a release agent is applied on the skin (12).

3. Method according to any of the preceding claims, wherein:
• the skin (12) has self-separating or self-releasing properties with respect to the plastic component.

4. Method according to any of the preceding claims, further comprising the step that:
• during the curing step, the pressure in the foam core (13) is controlled according to a predetermined value or a predetermined function.

5. Method according to the preceding claim, wherein:
• the pressure controlling step involves that the pressure is decreased and/or increased and/or kept unchanged.

6. Method according to the preceding claim, wherein:
• the pressure increasing is performed in such a way that a pressurized fluid is fed through the skin (12) into the foam core (13) and/or that a gas is generated inside the foam core (13) by means of a chemical reaction and/or that gas inside the foam core (13) is heated.

7. Method according to any of the preceding claims, wherein:
• the foam core (13) is not destroyed.

8. Method for producing a fibre-reinforced plastic component (17), comprising the steps that:
• a first mould core (10.1) is made from a first integral foam (11.1) with a first closed skin (12.1) and with a first open-cell foam core (13.1) connected to the first skin (12.1);
• a second mould core (10.2) is made from a second integral foam (11.2) with a second closed skin (12.2) and with a second open-cell foam core (13.2) connected to the second skin (12.2);
• the first mould core (10.1) and the second mould core (10.2) are connected with each other to form a mould core complex (21);
• a fibre component and a plastic component of a fibre-reinforced plastic are laid-up on the skins (12.1, 12.2) of the mould core complex (21);
• the fibre-reinforced plastic is cured;
• gas is evacuated from the foam cores (13.1, 13.2) so that the mould cores (10.1, 10.2, 10.3) implode or collapse or shrink;
• the imploded mould cores (10.1, 10.2, 10.3) are removed from the cured fibre-reinforced plastic.

9. Method according to the preceding claim, wherein:
• the first mould core (10.1) and the second mould core (10.2) have mating connection faces (22.1);
• the mould core complex forming step is performed in such a way that the mating connection faces (22.1) are connected with each other.

10. Method according to any of the 2 preceding claims, further comprising the step that:
• the first foam core (13.1) and the second foam core (13.2) are coupled by means of a fluid conduit.

11. Mould core (10), especially for use in a method according to any of the preceding claims, comprising:
• an integral foam (11) with a closed skin (12) and with an open-cell foam core (13) connected to the skin (12).

12. Mould core (10) according to the preceding claim, wherein:
• the skin (12) has self-separating or self-releasing properties with respect to the plastic component.

13. Mould core (10) according to any of the preceding claims, further comprising:
• a fluid connecting element (14) with a fluid passage (15) penetrating the skin (12), for evacuating gas from the foam core (13) and/or for feeding a pressurized fluid into the foam core (13).

14. Mould core complex (21), especially for use in a method according to any of the preceding claims, comprising:
• a first mould core (10.1) comprising a first integral foam (11.1) with a first closed skin (12.1) and with a first open-cell foam core (13.1) connected to the first skin (12.1);
• a second mould core (10.2) comprising a second integral foam (11.2) with a second closed skin (12.2) and with a second open-cell foam core (13.2) connected to the second skin (12.2);
wherein:
• the first mould core (10.1) and the second mould core (10.2) are connected with each other.

15. Mould core complex (21) according to the preceding claim, wherein:
• the first mould core (10.2) and the second mould core (10.2) have mating connection faces (22.1);
• the mating connection faces (22.1) are connected with each other.

16. Mould core complex (21) according to any of the 2 preceding claims, further comprising;
• a fluid conduit with a fluid passage penetrating the first skin (12.1) and the second skin (12.2), for coupling the first foam core (13.1) and the second foam core (13.2).
